# EUROPÄISCHE PATENTSCHRIFT

(11) **EP 0 738 569 B1**
(45) Veröffentlichungstag und Bekanntmachung des Hinweises auf die Patenterteilung: **06.10.1999**
(21) Anmeldenummer: 95107525.8
(22) Anmeldetag: 17.05.1995
(51) Int. Cl.: B26F 1/00, B26D 1/46, B23D 53/04, B23D 55/02, B26D 7/06

(54) **Vertikalformschneidemaschine**
Vertical band saw apparatus
Dispositif de scie à ruban verticale

(43) Veröffentlichungstag der Anmeldung: 23.10.1996
(73) Patentinhaber: Albrecht Bäumer KG Spezialmaschinenfabrik, 57258 Freudenberg (DE)
(72) Erfinder: Hüskens, Gerd Dipl.-Ing., D-41239 Mönchengladbach (DE)
(74) Vertreter: Zwirner, Gottfried, Dipl.-Ing. Dipl.-W.-Ing.

(56) Entgegenhaltungen:
- EP-A- 0 007 927
- EP-A- 0 432 593
- DE-A- 2 207 196
- DE-A- 2 235 160
- DE-A- 2 329 238
- DE-A- 3 444 612
- US-A- 2 604 126
- US-A- 2 935 101
- US-A- 5 410 934

## Beschreibung

Die Erfindung bezieht sich auf eine Vertikalformschneidemaschine, insbesondere zum Schneiden von Schaumstoff, mit den Merkmalen des Oberbegriffs des Anspruchs 1.

Bei einer Vertikalformschneidemaschine dieser Art (DE 34 44 612) bestehen die Vorschubelemente aus Endlosbändern oder Rollen, die das Werkstück gesteuert über den Tischspalt schieben, der von einem Schneiddraht durchsetzt wird. Die Vorschubelemente und der Schneiddraht werden in abgestimmter Weise gleichzeitig und richtungsumkehrbar zur Erzeugung eines veränderlichen Formschnitts betätigt. Der Schneiddraht ist in einem etwa C-förmigen Halter geführt und soll im Bereich des Schlitzes in zwei Ebenen mindestens geringfügig verschwenkbar sein.

Trotz seines Namens ist der Schneiddraht an sich kein schneidendes, sondern ein fräsendes Element und erzeugt staubförmig zerriebenen Kunststoff entlang der Trennfuge. Es gibt Anwendungen, bei denen dieser Staub unerwünscht ist, weswegen man bei einer Vertikalformschneidemaschine auch bereits ein schmales Bandmesser angewendet hat (EP 0 390 939). Das Bandmesser ist längs zweier miteinander verbundener Schlaufen angeordnet, wobei die Zunahme der einen Schlaufe durch die Abnahme der anderen Schlaufe kompensiert wird und sich der Schneidbereich in der einen Schlaufe befindet, die den Tischspalt quer durchsetzt. Zur gesteuerten Verschiebung des Werkzeugs sind zwei Schieber vorgesehen, zwischen denen das Werkstück eingeklemmt und auf der geteilten Tischplatte verschoben wird.

Während die erstgenannte Vertikalschneidemaschine (DE 34 44 612) zwar einfach aufgebaut ist, hat sie den Nachteil einer gewissen Ungenauigkeit und der Staubentwicklung. Die andere Vertikalschneidemaschine (EP 0 390 939) vermag zwar genau und staubfrei zu schneiden, eine Vereinfachung der Bauweise der Maschine wäre aber wünschenswert. Hinzu kommt, daß das Prinzip der Einklemmung des Werkstücks bei den Formschnitten auch Nachteile mit sich bringen kann.

Der Erfindung liegt deshalb die Aufgabe zugrunde, eine Vertikalformschneidemaschine zu schaffen, die relativ einfach aufgebaut ist, genau arbeitet, staubfrei schneidet und die Einklemmung des Werkstücks bei der Durchführung des Formschnittes vermeidet.

Die gestellte Aufgabe wird aufgrund der Maßnahmen des Hauptanspruchs gelöst und durch die weiteren Maßnahmen der Unteransprüche ausgestaltet und weiterentwickelt.

Indem das Werkstückauflagensystem als Bandsystem vier aktiv angetriebene Kopfwalzen enthält, bleibt die Spannung in dem Auflagetrum praktisch konstant, auch wenn eine Richtungsumkehr des Vorschubantriebs erfolgt. Dadurch werden minimale Dehnungsänderungen in dem Auflagetrum vermieden, die zu etwas Schlupf gegenüber der Walze und dem Werkstück führen könnten, was zu entsprechenden Ungenauigkeiten der Bearbeitung des Werkstückes führen würde. Bei Verwendung eines Zahnriemenauflagesystems oder eines Kettenauflagesystems zum y-Vorschub des Werkstücks kommt man ohne Schlupf zwischen Zahnriemen oder Kette und Zahnwelle aus, und auch die Umlaufgeschwindigkeit der endlosen Elemente ist längs der x-Achse konstant (im Gegensatz zu einem Bandsystem, bei dem wegen der Balligkeit der Walzen es zu einem Abfall der Umlaufgeschwindigkeit an den Rändern kommt), jedoch werden höhere Spannkräfte für die Zahnriemen benötigt.

Das Schneidaggregat ist als offenes Portal mit möglichst starren Schenkeln gestaltet, um das Bandmesser relativ genau zu führen, wobei der Messerrücken als Bezugskante dient. Aufgrund der feststehenden oder feststellbaren Breite des Bandmessers kann, ausgehend von dieser Bezugskante, die Schneidkante des Messers in die Drehachse gelegt werden. Diese Drehachse wird durch Messerdrehantriebe bestimmt, die in dem Portal angebracht sind und vorzugsweise über getrennte Antriebsmotore verfügen, die synchron betreibbar sind. Auf diese Weise läßt sich die Schneidebene des Bandmessers als Tangente zum Formschnitt nachstellen, und zwar mit großer Genauigkeit auch bei einer großen Spannweite des Portals.

Das Portal kann mit seiner Hauptebene parallel zum Tischspalt angeordnet werden, was vor allem bei kleineren Maschinen in Betracht kommt, oder senkrecht zum Tischspalt, was bei größeren Maschinen bevorzugt wird, weil dann die Gesamtbreite der Maschine nicht viel größer ist als die Breite des Werkstückauflagesystems.

Die Erfindung wird anhand der Zeichnung beschrieben. Dabei zeigt:
- Fig. 1: eine Ansicht von oben in schematischer Darstellung,
- Fig. 2: eine Seitenansicht, schematisiert,
- Fig. 3: eine Frontansicht, schematisiert, und
- Fig. 4: eine Einzelheit der Messerdreheinrichtung.

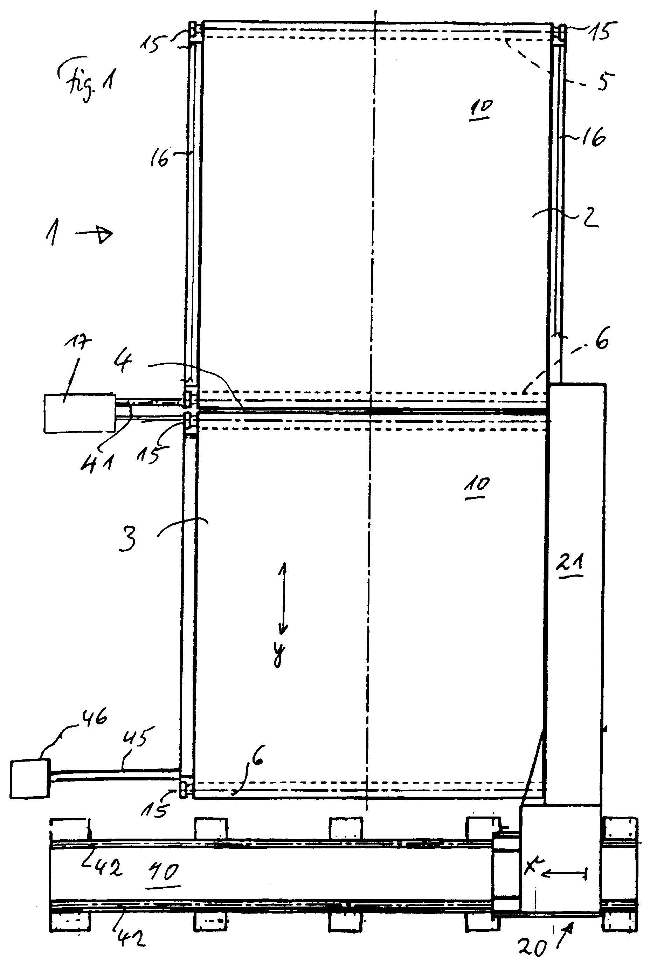

Es wird Bezug genommen auf Fig. 1 bis 3. Ein Werkstücktisch 1 ist aus zwei Teilbereichen 2 und 3 aufgebaut, zwischen denen sich ein Tischspalt 4 ersteckt. Die Teilbereiche 2 und 3 sind jeweils als Bandumlauf ausgebildet und umfassen jeweils zwei Kopfwalzen 5, 6 und zwei Umlenkwalzen 7, 8, über die je ein endloses Band 9 in Form eines Trapezes gespannt ist. Die beiden oberen Trumme 10 der Bandumläufe bilden die Werkstückauflage, welche die gesteuerte Verschiebung eines nicht dargestellten Schaumstoffblockes als Werkstück in y-Richtung über den Spalt 4 hinweg ermöglichen.

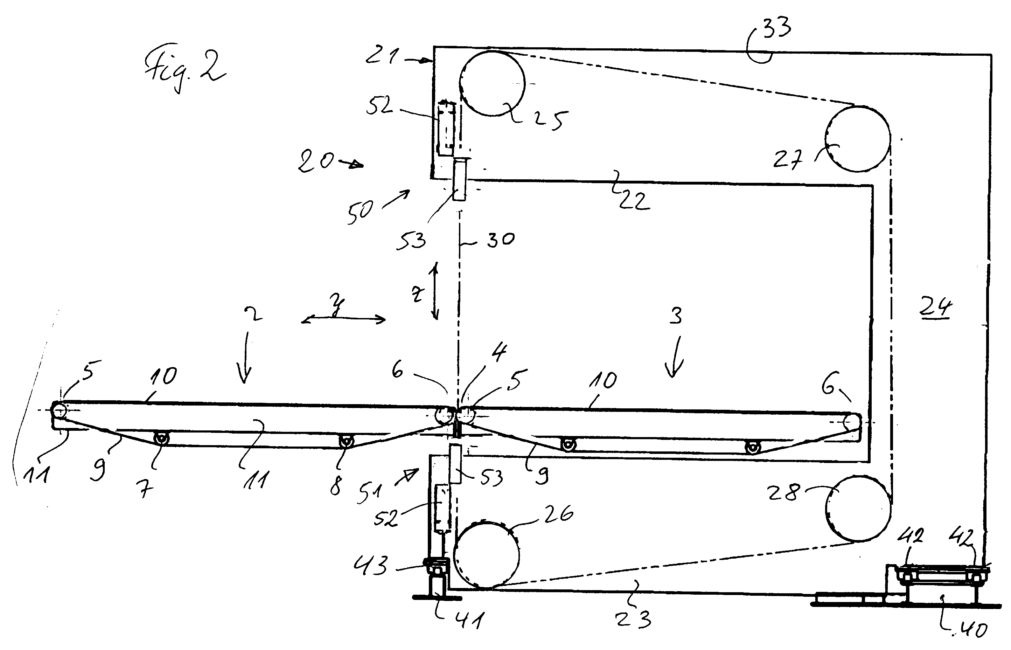

Der Tisch 1 verfügt über einen Tischrahmen 11, der über Beine oder Füße 12 zum Boden hin abgestützt wird, wobei diese Beine aus Gründen der Übersicht in Fig. 1 und 2 nicht dargestellt sind. Die Beine sind seitlich neben dem Bandsystem angeordnet und weisen hinsichtlich des Tisch-Teilbereichs 3 jeweils horizontale und vertikale Schenkel 13, 14 auf, die ähnlich wie bei Kriechtieren seitlich abstehen.

Die Kopfwalzen 5 und 6 der beiden umlaufenden Bänder 9 werden entweder direkt über vier synchron antreibbare Motoren angetrieben, oder es sind Zahnriemensysteme vorgesehen, welche über Zahnräder 15 (Fig. 1) und über schematisch dargestellte Zahnriemen 16 sowie einen Motor 17 sämtliche Kopfwalzen 5 und 6 antreibt. Die Zahnriemensysteme können auch für die Teilbereiche 2 und 3 getrennt ausgelegt sein, wobei dann zwei synchron antreibbare Motore verwendet werden. Im Gegensatz zu sonst üblichen Bandantrieben werden somit nicht nur eine Walze, sondern sämtliche Walzen angetrieben, über die sich die als Werkstückauflage spannenden Trumme 10 erstrecken. Der jeweilige Trum 10 bleibt deshalb auch bei Laufrichtungsumkehr des Bandes mit gleicher Kraft gespannt und unterliegt deshalb praktisch keinem Schlupf bei Bandrichtungsumkehr. Zur Verringerung des Schlupfes zwischen Schaumstoffblock als Werkstück und dem Bandtrum 10 als Werkstückauflage können am Band Stützelemente angebracht werden, welche das Rutschen des Schaumstoffblocks relativ zum Band verhindern.

Als Verschiebesystem für das Werkstück kann anstelle der beiden dargestellten Bänder 9 auch ein Ketten- oder Zahnriemenauflagesystem dienen, welches auf der Außenseite für die Vorschubauflage und auf der Innenseite für den Eingriff in Zahnräder ausgebildet ist. Im Falle eines Zahnriemenauflagesystems werden mehrere Zahnriemen parallel nebeneinander benutzt, die über Zahnwellen anstelle der Kopfwalzen angetrieben werden. Da es bei solchen Zahnriemen keinen Schlupf gibt, braucht nur eine Zahnwelle pro Teilbereich 2 oder 3 angetrieben zu werden. Bei einem Kettenauflagesystem würden mehrere Ketten parallel nebeneinander laufen und untereinander über Querstege verbunden sein, so daß insgesamt ein Rostumlauf gebildet wird. Das Kettenauflagesystem kann aus Kunststoffgliedern aufgebaut sein. Es läuft über Zahnwellen, von denen je eine Zahnwelle pro Teilbereich 2 oder 3 angetrieben wird. Auch hiermit läßt sich der Schlupf zwischen Werkstückauflagetrum und Antriebselement vermeiden, was zur Genauigkeit der Verschiebung der Werkstücke beiträgt.

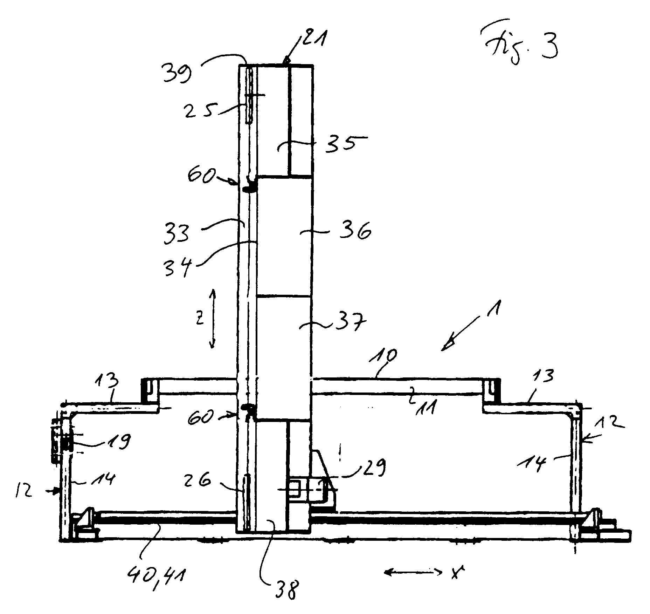

Die Vertikalformschneidemaschine umfaßt auch ein Schneidaggregat 20, das ein offenes Portal 21 mit einem oberen horizontalen Schenkel 22, einem unteren horizontalen Schenkel 23 und einem vertikalen Schenkel 24 umfaßt, die zu einem U oder C zusammengefügt sind. Das Schneidaggregat 20 umfaßt ferner einen Antriebsmotor 29 und vier Umlenkräder 25, 26, 27, 28, über die ein schmales Bandmesser 30 mit Schneidkante 31 und Messerrücken 32 gespannt ist. Die Schneidkante 31 kann glattrandig oder gezahnt sein, auch Wellungen sind möglich. Der Messerrücken 32 dagegen ist glattrandig. Die Umlenkräder 25 bis 28 sind in einem Messerumlaufbereich 33 des Portals 21 angeordnet, wie am besten aus Fig. 2 ersichtlich. Das Portal 21 ist aus einzelnen geschlossenen Versteifungskästen aufgebaut, von denen die Kästen 35, 36, 37, 38 in Fig. 3 dargestellt sind und die eine gemeinsame Wand 34 bilden, welche zusammen mit einem Rand 39 den Messerumlaufbereich 33 begrenzen. Die geschlossenen Kästen sorgen für Biege- und Verwindungssteifigkeit des Portals, um die Auswirkung von Beschleunigungen quer zur Hauptebene des Portals kleinzuhalten.

An dem einen Kopfende des Tisches 1 erstreckt sich eine Doppelführung 40 schräg unterhalb der Kopfwalze 6 des Tischteilbereiches 3 und unterhalb der Kopfwalze 6 des Tischteilbereiches 2 eine Einfachführung 41, auf denen das Portal 21 verfahrbar geführt ist. Zu diesem Zweck sind an dem unteren Schenkel 23 geeignete Lager 42, 43 vorgesehen, die in die Längsführungen 40, 41 eingreifen, um das Portal 21 in x-Richtung zu führen. Nahe der Schwerelinie des Portals ist ferner eine Zugspindel 45 angeordnet, die an dem unteren Schenkel 23 des Portals 21 angreift und mittels eines schematisch angedeuteten Motors 46 gesteuert antreibbar ist, um das Portal entsprechend den Anforderungen in der x-Richtung zu verschieben.

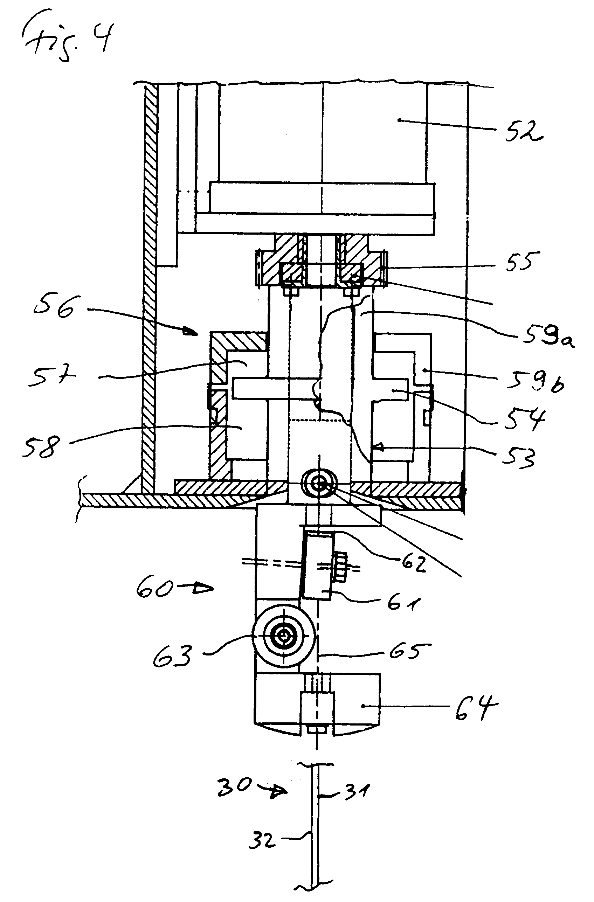

Die Schneidbewegung setzt sich somit aus einer in y-Richtung erfolgenden Tischbewegung und einer in x-Richtung erfolgenden Portalbewegung zusammen. Da das Schneidelement ein Bandmesser ist, welches eine Schneidebene definiert, muß diese in die augenblickliche Schnittrichtung gedreht werden. Zu diesem Zweck sind eine obere und eine untere Messerdreheinrichtung 50, 51 (Fig. 2) vorgesehen, die schematisch in Fig. 2 angedeutet sind und über getrennte Antriebsmotore 52 sowie je eine davon antreibbare, geschlitzte Hohlwelle 53 verfügen. Der Antrieb erfolgt vom Motor 52 über ein Zahnradpaar 55 (Fig. 4). Die Hohlwelle 53 ist in einem Gehäuse 56 gegenüber radialen und axialen Verschiebungen gelagert und weist zu diesem Zweck einen Flansch 54 auf, der einen oberen Lagerbereich 57 gegenüber einem unteren Lagerbereich 58 voneinander trennt, in welchem axial und radial wirkende Rollen zur Stützung und Lagerung der Welle 53 untergebracht sind. Die geschlitzte Hohlwelle 53 trägt an ihrem unteren Ende eine Messerführung 60, welche zwei leicht gegeneinander versetzte Rollen 61, 62 und eine Stützrolle 63 sowie eine Abstreifvorrichtung 64 enthält. Die Achsen der Rollen 61 und 62 sind leicht geneigt, so daß für das dazwischen laufende Bandmesser die Tendenz besteht, gegen die Stützrolle 63 zu laufen, so daß der Messerrücken immer gut an der Stützrolle 63 anliegt. Die Drehung des Bandmessers 30 erfolgt um die Drehachse 65, welche mit der Messerkante zusammenfällt. Die beiden Motore 52 werden synchron betrieben, so daß gewährleistet ist, daß die Bandmesserebene oben und unten bei den beiden Dreheinrichtungen 50, 51 die gleiche ist.

Rechts in Fig. 4 sind noch Schlitze 59a und 59b zu erkennen, die sich auch durch die Welle 53 und durch das Lagergehäuse 56 erstrecken. Diese Schlitze sind notwendig, um das in sich geschlossene Bandmesser 30 in die Maschine einsetzen zu können. Für diese Montage des Bandmessers müssen auch die Beine 12 des Tisches durchwandert werden, weswegen Bandmesserschleusen 19 vorgesehen sind, wie sie in Fig. 3 links angedeutet sind.

## Patentansprüche

1. Vertikalformschneidmaschine mit folgenden Merkmalen:
a. ein Werkstücktisch (1) mit einem umlaufenden Werkstückauflagesystem, wobei zwei synchron in y-Richtung steuerbare Auflagetrumme (10) als Vorschubelemente und ein Tischspalt (4) zwischen diesen gebildet werden;
b. ein Schneidaggregat (20) mit einem Schneidelement, das über vier Umlenkräder (25-28) gespannt in dem Schneidaggregat (20) umlaufend und durch den Tischspalt (4) in der z-Richtung antreibbar ist, wobei das Schneidaggregat (20) in x-Richtung steuerbar verfahrbar ist;
gekennzeichnet durch folgende Ausbildung:
c. das Werkstückauflagesystem ist ein Bandsystem und enthält vier aktiv angetriebene Kopfwalzen (5, 6) oder stellt ein Zahnriemenauflagesystem bzw. Kettenauflagesystem dar, das über Zahnwellen läuft, von denen eine Zahnwelle pro Auflagetrum (10) angetrieben wird;
d. das Schneidelement ist ein Bandmesser (30), das eine gegebenenfalls gezahnte Schneidkante (31) und einen Messerrücken (32) aufweist;
e. das Schneidaggregat (20) ist als offenes Portal (21) mit einem oberen horizontalen Schenkel (22), einem unteren horizontalen Schenkel (23) und einem vertikalen Schenkel (24) gestaltet, wobei an dem unteren Schenkel (23) Lagermittel (42, 43) zum Eingriff an Führungsmitteln (40, 41) vorgesehen sind, die parallel zum Tischspalt (4) verlaufen;
f. eine obere Messerdreheinrichtung (50) ist an dem oberen Schenkel (22) des Schneidaggregats (20) und eine untere Messerdreheinrichtung (51) ist an dem unteren Schenkel (23) so angeordnet, daß die Drehachse (65) mit der Schneidkante (31) zusammenfällt oder dieser nahekommt.

2. Vertikalformschneidmaschine nach Anspruch 1,
dadurch gekennzeichnet,
daß die Messerdrehantriebe (50, 51) über getrennte Antriebsmotore (52) verfügen, die synchron betreibbar sind.

3. Vertikalformschneidmaschine nach Anspruch 1 oder 2,
dadurch gekennzeichnet,
daß das Bandsystem zwei endlose Bänder (9) mit je zwei angetriebenen Kopfwalzen (5, 6) und zwei im unteren Trum angeordneten Umlenkwalzen (7) enthält, und daß die Bänder (9) jeweils dem Umriß eines Trapezes folgen.

4. Vertikalformschneidmaschine nach Anspruch 3,
dadurch gekennzeichnet,
daß die Kopfwalzen (5, 6) jedes endlosen Bandes (9) oder die Kopfwalzen (5, 6) insgesamt über einen Zahnriemenantrieb (16) miteinander verbunden sind.

5. Vertikalformschneidmaschine nach einem der Ansprüche 1-4, dadurch gekennzeichnet,
daß die Führungsmittel eine nahe des Fußpunktes des Tischspaltes (4) angeordnete Führung (41) und eine nahe des Fußpunktes des inneren Endes des Bandsystems angeordnete Führung (40) aufweisen und
daß die Hauptebene des Portals (21) eine y-z-Ebene darstellt.

6. Vertikalformschneidmaschine nach Anspruch 5,
dadurch gekennzeichnet,
daß die Schenkel (22, 23, 24) des Portals (21) in sich geschlossene Versteifungskästen (35, 36, 37, 38) aufweisen, die zu einer biege- und verwindungssteifen Struktur miteinander verbunden sind und in denen die Achsen der Umlenkräder (25, 26, 27, 28) des Bandmessers gelagert sind, und
daß ein umrandeter Portalbereich (33) vorgesehen ist, der die Umlenkräder (25-28) und das Bandmesser (30) aufnimmt.

7. Vertikalformschneidmaschine nach Anspruch 5 oder 6,
dadurch gekennzeichnet,
daß der Werkstücktisch (1) im Überstreichbereich des Portals (21) mit Beinen (12) versehen ist, die jeweils einen vom Tischbereich wegweisenden, horizontalen Schenkel (13) und einen vertikalen Schenkel (14) aufweisen und die so angeordnet sind, daß sie den unteren horizontalen Schenkel (23) des Portals (21) in dessen betreffender Endstellung gerade umgeben.

8. Vertikalformschneidmaschine nach Anspruch 7,
dadurch gekennzeichnet,
daß die vertikalen Beinschenkel (14) der einen Tischseite Bandmesserschleusen (19) aufweisen.

9. Vertikalformschneidmaschine nach einem der Ansprüche 1 bis 8, dadurch gekennzeichnet,
daß jede Messerdreheinrichtung (50, 51) eine geschlitzte Hohlwelle (53) zum Durchtritt des Bandmessers (30) bei der Montage und Führungsmittel (61, 62, 63) für das Bandmesser (30) aufweist, welche die Schneidkante (31) des Bandmessers in die Drehachse (65) bzw. nahe zu dieser legen, und
daß die geschlitzte Hohlwelle (53) an zwei radialen Ebenen in radialer Richtung und an zwei weiteren radialen Ebenen in axialer Richtung abgestützt und gelagert wird.

10. Vertikalformschneidmaschine nach einem der Ansprüche 1 bis 4, dadurch gekennzeichnet,
daß die Hauptebene des Portals eine x-z-Ebene darstellt und
daß die Führungsmittel des Portals sich entlang einer Linie nahe des Fußpunktes des Tischspaltes erstrecken.

## Claims

1. A vertically form-cutting machine comprising:
a) a workpiece table (1) comprising a rotating workpiece support system, wherein two support runs (10) are synchronously controllable in y-direction as feed members with a gap (4) being formed therebetween in the table;
b) a cutting unit (20) comprising a cutting element which is tensioned over four guide wheels (25-28) and is rotably drivable in the cutting unit (20) through the table gap (4) in the z-direction, wherein the cutting unit (20) is movable in controlled manner in x-direction;
characterised by the following construction:
c) the workpiece support system being a belt system and containing four actively driven head rollers (5, 6) or being in the form of a toothed-belt support system or chain support system which runs over toothed shafts, one toothed shaft being driven per support run (10);
d) the cutting element being a belt knife (30) having a cutting edge (31) which is optionally toothed, and a knife back (32);
e) the cutting unit (20) being in the form of an open gantry (21) having an upper horizontal limb (22), a lower horizontal limb (23) and a vertical limb (24), bearing means (42, 43) being provided on the lower limb (23) for engaging guide means (40, 41) which extend parallel to the table gap (4), and
f) an upper knife-rotating device (50) being disposed on the upper limb (22) of the cutting unit (20) and a lower knife-rotating device (51) being disposed on the lower limb (23) in such a manner that the axis of rotation (65) coincides with or is near the cutting edge (31).

2. The vertically form-cutting machine according to claim 1, wherein the knife-rotating drives (50, 51) have separate drive motors (52) which are drivable in synchronism.

3. The vertically form-cutting machine according to claim 1 or 2,
wherein the belt system contains two endless belts (9) each with two driven head rollers (5, 6) and two guide rollers (7) in the bottom run, and that the belts (9) each follow the outline of a trapezium:

4. The vertically form-cutting machine according to claim 3, characterised in that the head rollers (5, 6) for each endless belt (9) or the head rollers (5, 6) as a whole are connected together by a toothed-belt drive (16).

5. The vertically form-cutting machine according to any of claims 1 to 4, wherein the guide means comprise a guide (41) disposed near a point vertically of the table gap (4) and a guide (40) disposed near a point vertically of the inner end of the belt system, and that the main plane of the gantry (21) is a y-z plane.

6. The vertically form-cutting machine according to claim 5, wherein the limbs (22, 23, 24) of the gantry (21) have closed reinforcing casings (35, 36, 37, 38) which are connected together to form a bending-resistant and torsion-resistant structure and in which the axes of the guide wheels (25, 26, 27, 28) of the belt knife are mounted, and wherein a boxed-in gantry region (33) is provided and receives the guide wheels (25-28) and the belt knife (30).

7. The vertically form-cutting machine according to claim 5 or 6, wherein that the workpiece table (1) in the region over which the gantry (21) travels, is provided with legs (12) which each have a vertical part (14) and a horizontal part (13) which points away from the table region and are so disposed that they just surround the lower horizontal limb (23) of the gantry (21) in the corresponding end position thereof.

8. The vertically form-cutting machine according to claim 7, wherein the vertical parts (14) of the legs on one side of the table have belt-knife locks (19).

9. A vertically form-cutting machine according to any of claims 1 to 8, wherein each knife-rotating device (50, 51) comprises a slotted hollow shaft (53) through which the belt knife (30) extends during assembly, and guide means (61, 62, 63) for the belt knife (30) which dispose the cutting edge (31) of the belt knife in or near the axis of rotation (65), and wherein the slotted hollow shaft (53) is supported in the radial direction and mounted on sites in two radial planes and is supported in the axial direction in two other radial planes.

10. The vertically form-cutting machine according to any of claims 1 to 4, wherein the main plane of the gantry is an x-z plane and that the gantry guide means extend along a line near a point vertically of the table gap.

## Revendications

1. Machine à ruban vertical de façonnage ayant les particularités suivantes :
a. une table porte-pièce (1) équipée d'un système circulant de support de pièce, deux éléments de support (10), pouvant être commandés en synchronisme dans la direction y et servant d'éléments d'avance, et un intervalle de table (4) situé entre ceux-ci, étant formés ;
b. un groupe de coupe (20) comprenant un élément de coupe, qui peut être entraîné dans la direction z en circulation sans fin dans le groupe de coupe (20) en étant tendu sur quatre roues de renvoi (25-28) et en passant dans l'intervalle de la table (4), le groupe de coupe (20) étant commandé de manière à être déplaçable dans la direction x ;
caractérisée par le mode d'exécution suivant :
c. le système de support de pièce est un système à bandes et comprend quatre rouleaux de tête entraînés de manière active (5, 6) ou représente un système à courroies crantées de support ou un système de support à chaînes qui passe sur des arbres dentés dont un arbre denté par brin de support (10) est entraîné ;
d. l'élément de coupe est une lame en ruban (30), qui a une arête coupante éventuellement dentée (31) ainsi qu'un dos de lame (32) ;
e. le groupe de coupe (20) est conformé en portique ouvert (21) comprenant une aile supérieure horizontale (22), une aile horizontale inférieure (23) et une aile verticale (24), des organes d'appui (42, 43) étant prévus sur l'aile inférieure (23) pour l'entrée en prise avec des organes de guidage (40, 41) qui sont orientés parallèlement à l'intervalle (4) de la table ;
f. un dispositif supérieur (50) d'entraînement de lame étant disposé sur l'aile supérieure (22) du groupe de coupe (20) et un dispositif inférieur (51) d'entraînement de lame étant disposé sur l'aile inférieure (23) de manière que l'axe de rotation (65) coïncide avec l'arête coupante (31) ou soit proche de cette dernière.

2. Machine à ruban vertical de façonnage selon la revendication 1,
caractérisée
en ce que les commandes (50, 51) destinées à faire tourner la lame disposent de moteurs séparés d'entraînement (52) qui peuvent être amenés à fonctionner en synchronisme.

3. Machine à ruban vertical de façonnage selon la revendication 1 ou 2,
caractérisée
en ce que le système à bandes comprend deux bandes sans fin (9) dont chacune est équipée de deux rouleaux commandés de tête (5, 6) et de deux rouleaux de renvoi (7) situés dans le brin inférieur et
en ce que chacune des bandes (9) suit le contour d'un trapèze.

4. Machine à ruban vertical de façonnage selon la revendication 3,
caractérisée
en ce que les rouleaux de tête (5, 6) de chaque bande sans fin (9) sont reliés l'un à l'autre ou les rouleaux de tête (5, 6) sont reliés ensemble par un entraînement à courroie crantée (16).

5. Machine à ruban vertical de façonnage selon l'une des revendications 1-4,
caractérisée
en ce que les organes de guidage comprennent un guide (41) disposé à proximité du pied de l'intervalle (4) de la table, ainsi qu'un guide (40) disposé à proximité du pied de l'extrémité intérieure du système à bandes et
en ce que le plan principal du portique (21) représente un plan y-z.

6. Machine à ruban vertical de façonnage selon la revendication 5,
caractérisée
en ce que les ailes (22, 23, 24) du portique (21) comprennent des caissons fermés sur eux-mêmes de rigidification (35, 36, 37, 38) qui sont reliés en une structure résistant à la flexion et à la torsion et dans lesquels les axes des roues de renvoi (25, 26, 27, 28) de la lame en ruban sont montés et
en ce qu'une zone encadrée du portique (33) qui est prévue loge les roues de renvoi (25-28) et la lame en ruban (30).

7. Machine à ruban vertical de façonnage selon la revendication 5 ou 6,
caractérisée
en ce que la table porte-pièce (1) est équipée, dans la zone balayée par le portique (21), de pieds (12) dont chacun comprend une aile horizontale (13) s'éloignant de la zone de la table et une aile verticale (14) et qui sont disposés de manière à entourer juste l'aile horizontale inférieure (23) du portique (21) à la position extrême correspondante de ce dernier.

8. Machine à ruban vertical de façonnage selon la revendication 7,
caractérisée
en ce que les ailes verticales (14) des pieds d'un côté de la table comportent des sas (19) pour la lame en ruban.

9. Machine à ruban vertical de façonnage selon l'une des revendications 1 à 8,
caractérisée
en ce que chaque dispositif (50, 51) d'entraînement de lame comprend un arbre creux fendu (53) pour le passage de la lame en ruban (30) lors du montage et des organes (61, 62, 63) de guidage de la lame en ruban (30) qui placent l'arête coupante (31) de la lame en ruban dans l'axe de rotation (65) ou à proximité de celui-ci et
en ce que l'arbre creux fendu (53) est soutenu et monté dans deux plans radiaux en direction radiale et dans deux autres plans radiaux en direction axiale.

10. Machine à ruban vertical de façonnage selon l'une des revendications 1 à 4,
caractérisée
en ce que le plan principal du portique représente un plan x-z et
en ce que les organes de guidage du portique sont disposés le long d'une ligne proche du pied de l'intervalle de la table.
